# EUROPEAN PATENT SPECIFICATION

(11) **EP 4 163 808 B1**
(45) Date of publication and mention of the grant of the patent: **25.02.2026**
(21) Application number: 21832898.7
(22) Date of filing: 16.03.2021
(51) Int. Cl.: H04W 48/18, H04L 45/302, H04L 45/00

(54) **METHOD FOR TRANSMITTING APPLICATION DATA, AND TERMINAL AND SYSTEM**
VERFAHREN ZUR ÜBERTRAGUNG VON ANWENDUNGSDATEN SOWIE ENDGERÄT UND SYSTEM
PROCÉDÉ DE TRANSMISSION DE DONNÉES D'APPLICATION ET TERMINAL ET SYSTÈME

(30) Priority: 30.06.2020 CN 202010615517
(43) Date of publication of application: 12.04.2023
(73) Proprietor: Huawei Technologies Co., Ltd., Longgang District, Shenzhen, Guangdong 518129 (CN)
(72) Inventor: LIU, Binjun, Shenzhen, Guangdong 518129 (CN); YU, Xiaoliang, Shenzhen, Guangdong 518129 (CN)
(74) Representative: Pfenning, Meinig & Partner mbB
(86) International application number: PCT/CN2021/081093
(87) International publication number: WO 2022/001192

(56) References cited:
- CA-A1- 3 091 045
- CN-A- 105 608 369
- CN-A- 109 286 567
- CN-A- 109 391 648
- CN-A- 109 429 277
- CN-A- 110 120 879
- CN-A- 110 768 836
- US-A1- 2020 187 106
- HUAWEI ET AL: "Discussion on Application Descriptor", vol. SA WG2, no. e-meeting; 20200224 - 20200227, 18 February 2020 (2020-02-18), XP051855511, Retrieved from the Internet <URL:https://ftp.3gpp.org/tsg_sa/WG2_Arch/TSGS2_137e_Electronic/Docs/S2-2002124.zip S2-2002124 Discussion on Application Descriptor in URSP.doc> [retrieved on 20200218]

## Description

### TECHNICAL FIELD

Embodiments of this application relate to the user equipment field, and in particular, to a user equipment, and system.

### BACKGROUND

User equipment is used in increasingly extensive scenarios. To meet user requirements in different use scenarios, applications in the user equipment are increasing. Currently, each application market (or an application store, which may also be referred to as an application platform) performs uniqueness verification on an application, to ensure uniqueness of the application. However, for another platform on which the application can be downloaded, especially a platform that does not perform the uniqueness verification on the application, when a user downloads and installs the application from this type of platform, the user may install a spoof application, and accordingly, the spoof application occupies high-priority resources of an operator.

CN 109286567 A concerns a route selection policy acquisition method. The method comprises steps: a policy control function receives an application function request from an application function, wherein the policy control function generates a route selection policy rule for a terminal, and the route selection policy rule comprises a service identifier for identifying the service type of traffic in the application; the policy control function sends an application function response to the application function; and the policy control function provides the route selection policy rule for the terminal. CN 105608369 A addresses an application software installation method and apparatus. CA 3091045 A1 provides a method for data route selection comprises: a terminal detects that application information matches data flow description information; the terminal determines a first route selection parameter for an application; the terminal routes data of the application to a first protocol data unit (PDU) session, wherein the first PDU session satisfies the first route selection parameter. HUAWEI ET AL, "Discussion on Application Descriptor", vol. SA WG2, no. e-meeting; 20200224 - 20200227, (20200218), 3GPP DRAFT; S2-2002124, provides a discussion on an application descriptor.

### SUMMARY

To resolve the foregoing technical problem in the conventional technology, the present invention provides a user equipment, and system according to the independent claims. Particular embodiments are specified in the dependent claims. In the present invention, a network device may indicate an App Store Id and an App Id to user equipment by using URSP information, so that only an application that meets the App Store Id and the App Id in the user equipment can route data to a sliced network indicated by the URSP information. This prevents a spoof application from occupying resources of an operator, and effectively improves resource utilization.

According to a first aspect, an application data transmission system is provided. The system includes a network device and user equipment. The network device is configured to send a first message to the user equipment. The first message includes URSP information. The URSP information includes an App Store Id, an App Id, and slice parameter information. The App Store Id is used to identify an application store, the App Id is used to identify an application, and the slice parameter information is used to indicate a sliced network. The user equipment is configured to: run a first application, and transmit data of the first application through the sliced network indicated by slice parameter information. The first application is from the application store indicated by the App Store Id in the USRP information, and an App Id of the first application is the same as the App Id in the URSP information. In this way, the user equipment may route, to the sliced network, data of an application whose App Store Id and App Id are the same as those indicated by the URSP information, to prevent a spoof application from occupying resources of an operator, and effectively improve resource utilization.

If a protocol data unit PDU session corresponding to the sliced network indicated by the slice parameter information is established between the user equipment and the network device, the user equipment is configured to transmit, based on the PDU session, the data of the first application over the sliced network indicated by the slice parameter information. In this way, the user equipment may transmit the data of the application based on the established PDU session, to implement binding between the application and the PDU session.

If a PDU session corresponding to the sliced network indicated by the slice parameter information is not established between the user equipment and the network device, the user equipment is configured to: establish the PDU session with the network device based on the slice parameter information; and transmit, based on the PDU session, the data of the first application over the sliced network indicated by the slice parameter information. In this way, the user equipment may establish a new PDU session for the application, and the user equipment may transmit the data of the application based on the established PDU session, to implement binding between the application and the PDU session.

There are a plurality of types of services in the user equipment, PDU sessions of different types of services correspond to different network slices, and different applications in the user equipment correspond to different service types. Furthermore, provided operators or service providers are different, even PDU sessions of a same service type may also correspond to different network slices. In other words, the network slice may provide a network resource for at least one PDU session of the user equipment.

The user equipment may be further configured to run a second application, and transmit data of the second application through a non-sliced network. The second application is not downloaded from the application store indicated by the App Store Id in the USRP information, and an App Id of the second application is the same as or different from the App Id in the URSP information. In this way, the user equipment may transmit, through the non-sliced network, data of an application that fails to match the App Store Id and the App Id indicated by the URSP information, to further prevent a spoof application from occupying resources of an operator, and effectively improve resource utilization.

The URSP information may further include an operating system identifier OS Id used to identify an operating system. An OS Id of an operating system of the user equipment is the same as the OS Id in the URSP information. In this way, for different operating systems, the network device may indicate, to a corresponding user equipment, an App Store Id and an App Id that correspond to the operating system of the user equipment. In other words, this application may be applied to current operating systems.

The URSP information may further include indication information used to indicate that the URSP information includes the App Store Id and the App Id. In this way, the user equipment may determine, by reading the indication information, that the URSP includes the App Store Id and the App Id.

The network device may be further configured to send a second message to the user equipment. The second message includes allowed network slice selection assistance information Allowed NSSAI used to indicate that the user equipment is allowed to transmit a data sliced network set. The sliced network indicated by the slice parameter information is included in the sliced network set. In this way, the user equipment may learn of a sliced network to which the network device allows the user equipment to route, and in a case of the sliced network indicated by the slice parameter information, route data of the application to the sliced network indicated by the slice parameter information.

The user equipment may be further configured to send, to the network device, a registration message used to register with and access the network device. Alternatively, the user equipment is further configured to send, to the network device, a service update message used to indicate that a service in the user equipment is updated. In this way, when the user equipment registers with a network or the service is updated, the user equipment may trigger the network device to deliver the URSP information.

The App Id may be an application package name of the application. In this way, the application market may verify validity and uniqueness of the application based on the application package name of the application, to ensure uniqueness of the App Id included in the URSP information.

The application store may be an application set including one or more applications.

According to a second aspect, user equipment is provided, including a processor and a memory. The memory is coupled to the processor, the memory stores program instructions, and when the program instructions are executed by the processor, the user equipment is enabled to perform the following steps: receiving a first message from a network device, where the first message includes UE route selection policy URSP information, the URSP information includes an application store identifier App Store Id, an application identifier App Id, and slice parameter information, the App Store Id is used to identify an application store, the App Id is used to identify an application, and the slice parameter information is used to indicate a sliced network; and running a first application, and transmitting data of the first application through the sliced network indicated by the slice parameter information, where the first application is from the application store indicated by the App Store Id in the USRP information, and an App Id of the first application is the same as the App Id in the URSP information.

When the program instructions are executed by the processor, the user equipment is enabled to perform the following step: if a protocol data unit PDU session corresponding to the sliced network indicated by the slice parameter information is established between the user equipment and the network device, transmitting, based on the PDU session, the data of the first application over the sliced network indicated by the slice parameter information.

When the program instructions are executed by the processor, the user equipment is enabled to perform the following steps: if a protocol data unit PDU session corresponding to the sliced network indicated by the slice parameter information is not established between the user equipment and the network device, establishing the PDU session with the network device based on the slice parameter information; and transmitting, based on the PDU session, the data of the first application over the sliced network indicated by the slice parameter information.

When the program instructions are executed by the processor, the user equipment may be enabled to perform the following steps: running a second application, and transmitting data of the second application through a non-sliced network. The second application is not downloaded from the application store indicated by the App Store Id in the USRP information, and an App Id of the second application is the same as or different from the App Id in the URSP information.

The URSP information may further include an operating system identifier OS Id used to identify an operating system. An OS Id of an operating system of the user equipment is the same as the OS Id in the URSP information.

The URSP information may further include indication information used to indicate that the URSP information includes the App Store Id and the App Id.

When the program instructions are executed by the processor, the user equipment may be enabled to perform the following step: receiving a second message from the network device. The second message includes allowed network slice selection assistance information Allowed NSSAI used to indicate that the user equipment is allowed to transmit a data sliced network set. The sliced network indicated by the slice parameter information is included in the sliced network set.

When the program instructions are executed by the processor, the user equipment may be enabled to perform the following step: sending, to the network device, a registration message used to register with and access the network device; or sending, to the network device, a service update message used to indicate that a service in the user equipment is updated.

The App Id may be an application package name of the application.

The application store may be an application set including one or more applications.

According to a third aspect, an application data transmission method is provided, including: User equipment receives a first message from a network device. The first message includes UE route selection policy URSP information. The URSP information includes an application store identifier App Store Id, an application identifier App Id, and slice parameter information. The App Store Id is used to identify an application store, the App Id is used to identify an application, and the slice parameter information is used to indicate a sliced network. The user equipment runs a first application, and transmits data of the first application through the sliced network indicated by the slice parameter information. The first application is from the application store indicated by the App Store Id in the USRP information, and an App Id of the first application is the same as the App Id in the URSP information.

The transmitting data of the first application through the sliced network indicated by the slice parameter information includes: if a protocol data unit PDU session corresponding to the sliced network indicated by the slice parameter information is established between the user equipment and the network device, transmitting, based on the PDU session, the data of the first application over the sliced network indicated by the slice parameter information.

The transmitting data of the first application through the sliced network indicated by the slice parameter information includes: if a protocol data unit PDU session corresponding to the sliced network indicated by the slice parameter information is not established between the user equipment and the network device, establishing, by the user equipment, the PDU session with the network device based on the slice parameter information; and transmitting, based on the PDU session, the data of the first application over the sliced network indicated by the slice parameter information.

The user equipment may run a second application, and transmit data of the second application through a non-sliced network. The second application may not be downloaded from the application store indicated by the App Store Id in the USRP information, and an App Id of the second application is the same as or different from the App Id in the URSP information.

The URSP information may further include an operating system identifier OS Id used to identify an operating system. An OS Id of an operating system of the user equipment is the same as the OS Id in the URSP information.

The URSP information may further include indication information used to indicate that the URSP information includes the App Store Id and the App Id.

Before the user equipment receives the first message from the network device, the method may further include: The user equipment receives a second message from the network device. The second message includes allowed network slice selection assistance information Allowed NSSAI used to indicate that the user equipment is allowed to transmit a data sliced network set. The sliced network indicated by the slice parameter information is included in the sliced network set.

Before the receiving a second message from the network device, the method may further include: The user equipment sends, to the network device, a registration message used to register with and access the network device. Alternatively, the user equipment sends, to the network device, a service update message used to indicate that a service in the user equipment is updated.

The App Id may be an application package name of the application.

The application store may be an application set including one or more applications.

According to a fourth aspect, a network device is provided, including a processor and a memory. The memory is coupled to the processor, the memory stores program instructions, and when the program instructions are executed by the processor, the network device performs the steps of the method according to the third aspect.

### BRIEF DESCRIPTION OF DRAWINGS

To describe technical solutions in embodiments of this application more clearly, the following briefly introduces the accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a schematic diagram of a hardware structure of user equipment according to an embodiment of this application;
FIG. 2 is a schematic diagram of a software structure of user equipment according to an embodiment of this application;
FIG. 3 is a schematic diagram of a communication system according to an embodiment of this application;
FIG. 4 is a schematic diagram of an example of a format of a URSP;
FIG. 5 is a schematic diagram of an example of a user interface;
FIG. 6 is a schematic diagram of an example of a user interface;
FIG. 7 is a schematic flowchart of an application data transmission method according to an embodiment of this application;
FIG. 8 is a schematic diagram of an example of a format of a URSP;
FIG. 9 is a schematic diagram of an example of a user interface;
FIG. 10 is a schematic diagram of an example of a format of a URSP;
FIG. 11 is a schematic diagram of an example of a format of a URSP;
FIG. 12 is a schematic diagram of a structure of user equipment according to an embodiment of this application; and
FIG. 13 is a schematic diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The following table lists terms used in this application and explanations of the terms.

| Acronyms and Abbreviations | Full name/standard English term | English |
|---|---|---|
| URSP | UE route selection policy. This policy is used by the UE to determine how to route outgoing traffic. Traffic can be routed to an established PDU Session, can be offloaded to non-3GPP access outside a PDU Session, or can trigger the establishment of a new PDU Session. | UE route selection policy. This policy is used by the UE to determine how to route outgoing traffic. Traffic can be routed to an established PDU Session, can be offloaded to non-3GPP access outside a PDU Session, or can trigger the establishment of a new PDU Session. |
| Application descriptors | It consists of OSId and OSAppId(s). The information is used to identify the Application(s) that is (are) running on the UE's OS. The OSId does not include an OS version number. The OSAppId does not include a version number for the application. | It consists of OSId and OSAppId(s). The information is used to identify the Application(s) that is (are) running on the UE's OS. The OSId does not include an OS version number. The OSAppId does not include a version number for the application. |
| Operating System (OS) | Collection of UE software that provides common services for applications. | Operating System |
| Operating System Identifier (OSId) | An identifier identifying the operating system. | An identifier identifying the operating system. |
| OS specific Application Identifier (OSAppId) | An identifier associated with a given application and uniquely identifying the application within the UE for a given operating system. | An identifier associated with a given application and uniquely identifying the application within the UE for a given operating system. |

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used to distinguish between different target objects, but are not used to describe a particular order of the target objects.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example" or "for example" or the like is intended to present a relative concept in a specific manner.

In the description of the embodiment of this application, unless otherwise stated, "multiple" means two or more than two. For example, a plurality of processing units refer to two or more processing units, and a plurality of systems refer to two or more systems.

In descriptions of embodiments of this application, an application in user equipment may also be referred to as an application program, application software, or the like. This is not limited in this application.

In descriptions of embodiments of this application, the user equipment may be referred to as a terminal, a terminal device, user equipment (user equipment, UE), or the like. The user equipment may be a device such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA) that can access a network.

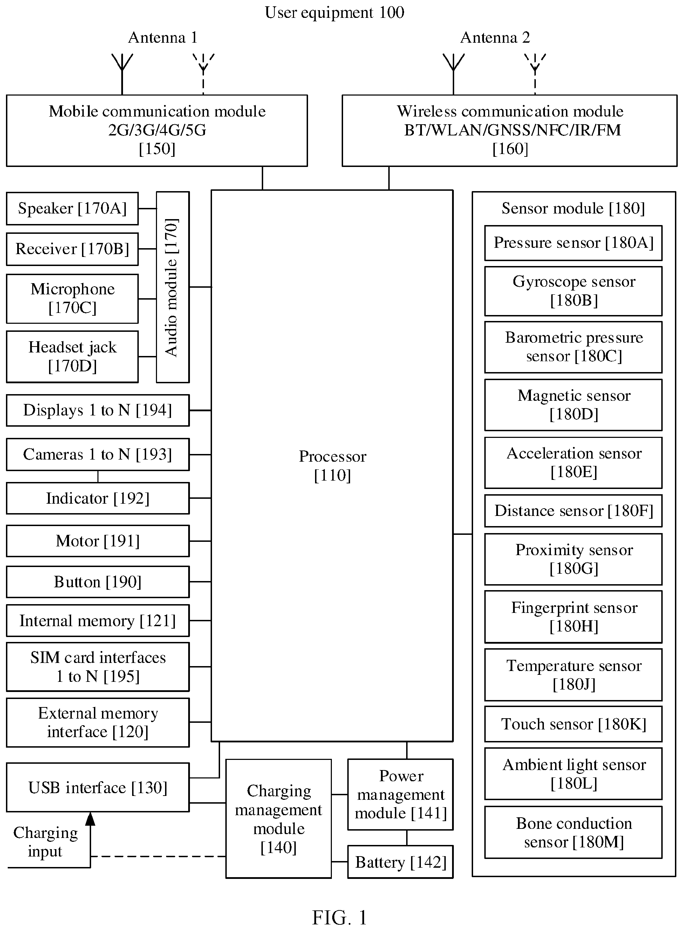

FIG. 1 is a schematic diagram of a structure of user equipment 100. The user equipment 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the user equipment 100. In some other embodiments of this application, the user equipment 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem (Modem), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the user equipment 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to a charger to charge the user equipment 100, or may be configured to transmit data between the user equipment 100 and a peripheral device, or may be configured to connect to a headset for playing audio through the headset. The interface may be further configured to connect to another electronic device such as an AR device.

It may be understood that an interface connection relationship between the modules in this embodiment of this application is merely an example for description, and does not constitute a limitation on the structure of the user equipment 100. In some other embodiments of this application, the user equipment 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the user equipment 100. When charging the battery 142, the charging management module 140 may further supply power to the user equipment by using the power supply management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the user equipment 100 may be implemented through the antenna 1, the antenna 2, the mobile communication module 150, the wireless communication module 160, the modem processor, the baseband processor, and the like.

The user equipment 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The user equipment 100 may be used to listen to music or answer a call in a hands-free mode over the speaker 170A.

The receiver 170B, also referred to as an "earpiece", is configured to convert an electrical audio signal into a sound signal. When a call is answered or speech information is received through the user equipment 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. One or more microphones 170C may be disposed in the user equipment 100. In some other embodiments, two microphones 170C may be disposed in the user equipment 100, to collect a sound signal and implement a noise reduction function. In some other embodiments, three, four, or more microphones 170C may alternatively be disposed in the user equipment 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The user equipment 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the user equipment 100 may include one or N displays 194, where N is a positive integer greater than 1.

The user equipment 100 may implement an image shooting function by using the ISP, the camera 193, the video codec, the GPU, the display 194, the application processor, and the like.

The ISP is configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 may be configured to capture a static image or a video. An optical image of an object is generated through the lens, and is projected onto the photosensitive element. The photosensitive may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the user equipment 100 may include one or N cameras 193, where N is a positive integer greater than 1.

The digital signal processor is configured to process a digital signal, and may process another digital signal in addition to the digital image signal. For example, when the user equipment 100 selects a frequency, the digital signal processor is configured to perform Fourier transformation on frequency energy.

The video codec is configured to compress or decompress a digital video. The user equipment 100 may support one or more video codecs. In this way, the user equipment 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the user equipment 100 may be implemented through the NPU, for example, image recognition, facial recognition, speech recognition, and text understanding

The external memory interface 120 may be used to connect to an external memory card, for example, a micro SD card, to extend a storage capability of the user equipment 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to implement various function applications and data processing of the user equipment 100. The internal memory 121 may include a program storage area and a data storage area. The program storage area may store an operating system, an application required by one or more functions (for example, a sound play function and an image play function), and the like. The data storage area may store data (for example, audio data and a phone book) and the like created when the user equipment 100 is used. In addition, the internal memory 121 may include a high-speed random access memory, and may further include a nonvolatile memory, for example, one or more magnetic disk storage devices, a flash memory device, a universal flash storage (universal flash storage, UFS), or the like.

The button 190 includes a power button, a volume button, and the like. The button 190 may be a mechanical button, or may be a touch button. The user equipment 100 may receive a button input, and generate a button signal input related to a user setting and function control of the user equipment 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the user equipment 100. The user equipment 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The user equipment 100 interacts with a network through the SIM card, to implement functions such as calling and data communication. In some embodiments, the user equipment 100 uses an eSIM, namely, an embedded SIM card. The eSIM card may be embedded in the user equipment 100, and cannot be separated from the user equipment 100.

A software system of the user equipment 100 may use a layered architecture, an event-driven architecture, a microkernel architecture, a microservice architecture, or a cloud architecture. In embodiments of this application, an Android system with a hierarchical architecture is used as an example to describe a software structure of the user equipment 100.

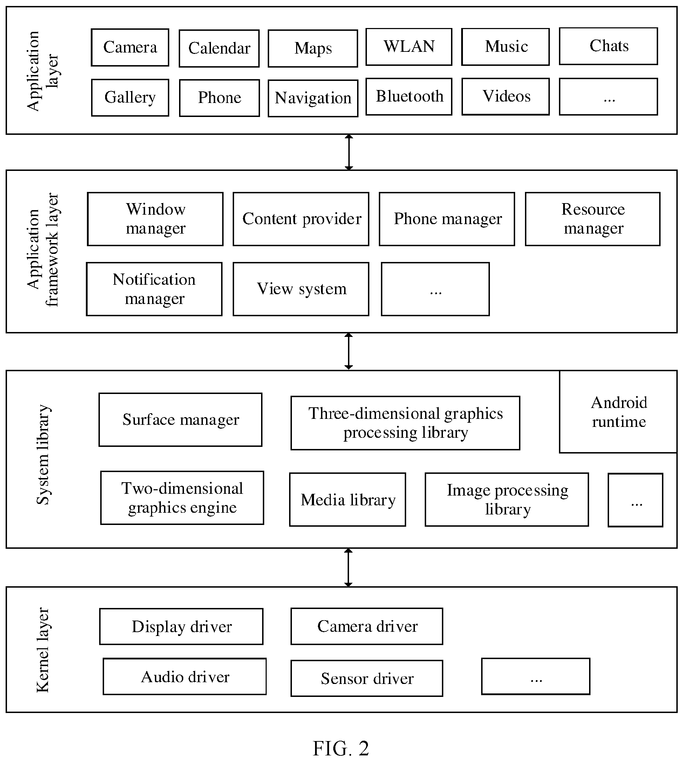

FIG. 2 is a block diagram of a software structure of the user equipment 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Chat.

The application framework layer provides an application programming interface (application programming interface, API) and a programming framework for an application at the application layer. The application framework layer includes some predefined functions.

As shown in FIG. 2, the application framework layer (Framework) may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the user equipment 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is played, the user equipment vibrates, and the indicator light blinks.

The Android runtime includes a kernel library and a virtual machine. The Android runtime is responsible for scheduling and management of the Android system.

The core library includes two parts: a function that needs to be invoked in java language, and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

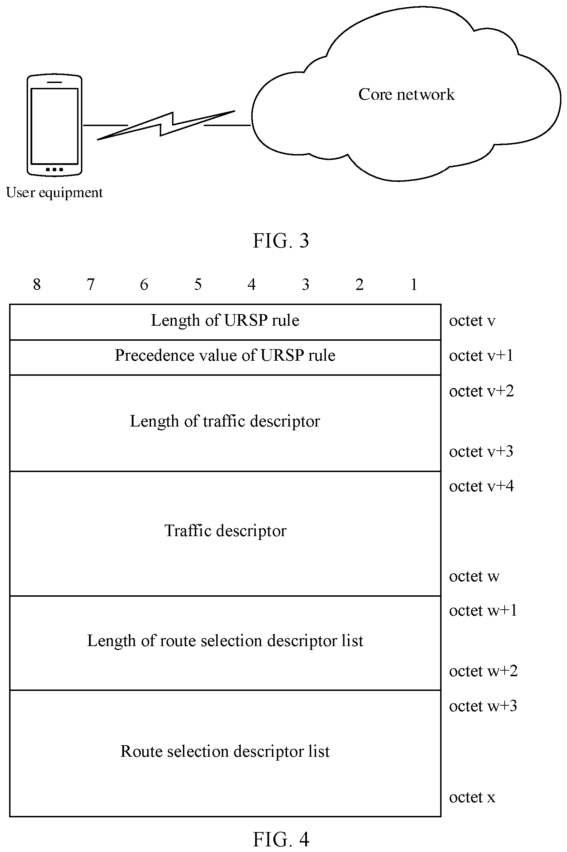

Before the technical solutions in embodiments of this application are described, a communication system in embodiments of this application is first described with reference to the accompanying drawings. FIG. 3 is a schematic diagram of a communication system according to an embodiment of this application. The communication system includes user equipment and a core network.

It should be noted that, during actual application, there may be one or more user equipments. A quantity of user equipments in the communication system shown in FIG. 3 is merely an adaptive example. This is not limited in this application.

It should be further noted that the core network includes one or more core network devices. Optionally, the core network device may be an access and mobility management function (access and mobility management function, AMF), and is mainly responsible for functions such as access control, mobility management (mobility management, MM), attachment and detachment, and gateway selection. The core network device in embodiments of this application is not limited to the AMF.

A concept of a network slice is introduced into a 5th generation (5th Generation, 5G) communication system, and in a network slicing technology, one physical network can be divided into a plurality of virtual networks. One virtual network is considered as one "network slice", and network slices are independent of each other. Different protocol data unit (protocol data unit, PDU) sessions in one user equipment may need a network slice corresponding to each PDU session to provide a service.

To make a person skilled in the art better understand this application, the following briefly describes the concept of the network slice in this application.

As a key technology in 5G, the network slice has been widely concerned and researched in 3GPP and other international standards organizations, and can satisfy customization requirements of operators on various industries, vertical markets, and virtual operation services. The network slice is a logical network that provides specific network capabilities and network characteristics (Network Slice: A logical network that provides specific network capabilities and network characteristics). The network slice may be a logical network having different network capabilities and network characteristics, and the logical network is on a physical or virtual network infrastructure and is customized based on different service requirements, tenants, or the like. The network slice includes a group of network capabilities and resources (for example, a computing resource, a storage resource, and a network resource) required for the network capabilities.

A network slice supported by each cell is configured by an operation, administration and maintenance (operation, administration and maintenance, OAM) system. Single network slice selection assistance information (single network slice selection assistance information, S-NSSAI) is used to identify one network slice.

The S-NSSAI includes at least one of the following: slice type and service type (slice/service type, SST) information. Optionally, the S-NSSAI may further include slice differentiator (slice differentiator, SD) information. The SST information is used to indicate behavior of the network slice, for example, a characteristic and a service type of the network slice, and the SD information is supplementary information of the SST. For example, if the SST points to a plurality of network slices, the SD may assist in corresponding to one unique network slice.

There are a plurality of types of services in the user equipment: an enhanced mobile broadband (enhanced mobile broadband, eMBB) service, ultra-reliable low-latency communications (ultra-reliable low-latency communications, URLLC), and massive machine type communication (massive machine type communication, mMTC). PDU sessions of different types of services may correspond to different network slices. In the present invention, different applications in the user equipment may correspond to different service types. In other words, the applications in the user equipment may correspond to different network slices. Furthermore, provided operators or service providers are different, PDU sessions of a same service type correspond to different network slices. In other words, the network slice may provide a network resource for at least one PDU session of the user equipment.

In some embodiments, a "trustlist" or "blocklist" application may also be set. For example, when the user equipment device runs a first application, and the first application is a trustlist application, the user equipment device may interact with a network side by using a slice resource. It may be understood that when the user equipment device runs a second application, and the second application is a non-trustlist application, the slice resource is not used. Similarly, an application in the blocklist may be prohibited from using a network handover, and an application outside the blocklist may use the slice resource.

For example, with reference to FIG. 3, in a 5G application scenario, the core network sends a UE route selection policy (UE route selection policy, URSP) to the user equipment. The URSP may be used to indicate a traffic characteristic and a sliced network activation parameter that need to be transmitted over a sliced network, so that the user equipment determines how to route data (which may be understood as data of applications of different service types). How to route data includes which slice is specifically routed to, or transmitting data by using a non-sliced network.

For example, FIG. 4 is a schematic diagram of an example of a format of the URSP. The URSP includes but is not limited to a length of URSP rule (length of URSP rule) field, a precedence value of URSP rule (precedence value of URSP rule) field, a length of traffic descriptor (length of traffic descriptor) field, a traffic descriptor field, a length of route selection descriptor list (length of route selection descriptor list) field, and a route selection descriptor list field.

The route selection descriptor list field is used to carry a sliced network activation parameter, and the sliced network activation parameter includes but is not limited to parameters such as S-NSSAI corresponding to one or more slices.

The traffic descriptor field is used to carry information (or a parameter) corresponding to the foregoing traffic characteristic that needs to be transmitted on the slice. For definitions of other fields, refer to descriptions in the 3GPP standard. Details are not described herein again.

Descriptions of the traffic descriptor field in 3GPP 24526 are as follows:

| Traffic descriptor component type identifier (traffic descriptor field type definition) | |
|---|---|
| Bits (bits) | |
| 87654321 | |
| 0 0 0 0 0 0 0 1 | Match-all type (Match-all type) |
| 0 0 0 0 1 0 0 0 | OS Id + OS App Id type (operating system identifier + operating system application identifier type) |
| 0 0 0 1 0 0 0 0 | IPv4 remote address type (IPv4 remote address type) |
| 0 0 1 0 0 0 0 1 | IPv6 remote address/prefix length type (IPv6 remote address/prefix length type) |
| 0 0 1 1 0 0 0 0 | Protocol identifier/next header type (Protocol identifier/next header type) |
| 0 1 0 1 0 0 0 0 | Single remote port type (Single remote port type) |
| 0 1 0 1 0 0 0 1 | Remote port range type (Remote port range type) |
| 0 1 1 0 0 0 0 0 | Security parameter index type (Security parameter index type) |
| 0 1 1 1 0 0 0 0 | Type of service/traffic class type (Type of service/traffic class type) |
| 1 0 0 0 0 0 0 0 | Flow label type (Flow label type) |
| 1 0 0 0 0 0 0 1 | Destination MAC address type (Destination MAC address type) |
| 1 0 0 0 0 0 1 1 | 802.1Q C-TAG VID type (802.1Q user label VLAN identifier type) |
| 1 0 0 0 0 1 0 0 | 802.1Q S-TAG VID type (802.1Q service label VLAN identifier type) |
| 1 0 0 0 0 1 0 1 | 802.1Q C-TAG PCP/DEI type (802.1Q user label priority code point/drop eligible indicator type) |
| 1 0 0 0 0 1 1 0 | 802.1Q S-TAG PCP/DEI type (802.1Q service label priority code point/drop |
| eligible indicator type) | |
| 1 0 0 0 0 1 1 1 | Ethertype type (Ethernet type) |
| 1 0 0 0 1 0 0 0 | DNN type (data network name (Data Network Name) type) |
| 1 0 0 1 0 0 0 0 | Connection capabilities type (Connection capabilities type) |

The OS Id + OS App Id constitutes application descriptors (application descriptors) information, which is used to identify an application in the operating system. It may also be understood that the application descriptors may be used to indicate which applications in the operating system can transmit data by using the sliced network. The OS Id is used to identify an operating system, and the OS App Id is used to identify an application in the operating system.

An Android (Android) operating system is used as an example (it should be noted that another operating system is similar to the Android operating system, and details are not described in this application). An OS App Id (referred to as an App Id for short below) corresponding to an application in the Android operating system is an application package name. The Android operating system defines the App Id as follows:

Each Android application has a unique app ID, like a Java software package name, for example, com.example.myapp. This ID can uniquely identify your app in a vendor and Google Play Store. If you want to upload a new version of the app, the app ID (and a certificate used for signing your app) is the same as that of an original APK. If you change the app ID, Google Play Store will regard the Android application package (Android application package, APK) as a totally different app. Therefore, you should never change the app ID after releasing your app.

The App Id in the Android operating system is specified by an application developer in a development program, for example, build.gradle. When the application developer releases an application in an Android application market (for example, Huawei AppGallery or Google Play), the application market verifies uniqueness of the App Id. To be specific, as mentioned above, if the App IDs are different, the applications are considered as two totally different applications. Therefore, the application market can ensure uniqueness of the App Id in the application market.

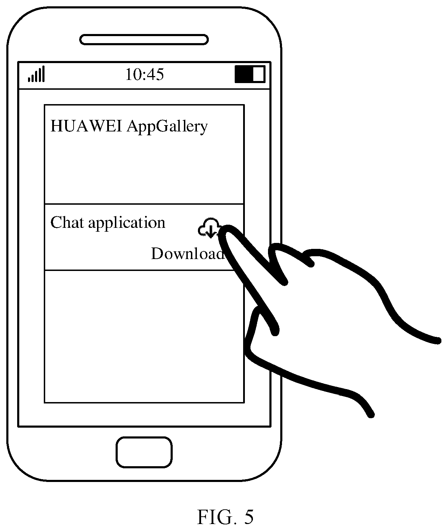

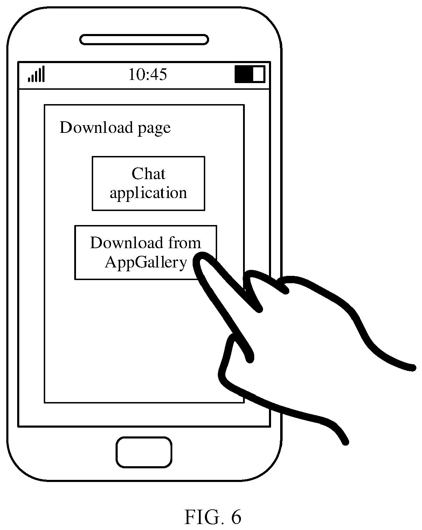

FIG. 5 is a schematic diagram of an example of a user use scenario. For example, user equipment is a mobile phone. A user may download an application by using Huawei AppGallery in the mobile phone. Refer to FIG. 5. The user may tap on a screen to download and install a chat application. When the user equipment device downloads and installs the chat application from an application store, the user equipment device may obtain identification information of the application, for example, information such as a version number of the application, a supported operating system type OS Id, and an App Id of the application. Alternatively, the identification information may be obtained when the user equipment device runs the application (for example, runs the application in the foreground) for the first time. When the user equipment device needs to exchange data with the core network, for example, when sending a voice message, the user equipment may match the obtained OS Id and App Id with an OS Id and App Id (that is, OS App Id) indicated by an OS Id + OS App Id type in the URSP pre-delivered by the core network. If the matching succeeds, the user equipment routes data of the chat application to a specified slice for transmission according to indication of the URSP. If the matching fails, the data is transmitted through the non-sliced network. However, in some scenarios, the user may download an application by using an adb install (Android Debug Bridge install, Android Debug Bridge install) tool or from a download page provided by a third-party server. It should be noted that the third-party server does not provide validity (that is, uniqueness) verification of an App Id. Therefore, a map application downloaded by the user may be a spoof application. An App Id (for example, an application package name) of the spoof application is consistent with an App Id of any application in the application market. For example, refer to FIG. 6. The user may access, by using the mobile phone, a download page provided by a third-party server, to download a map application. The user equipment downloads the map application from the third-party server on the download page according to the user instruction. An application package name of the map application is consistent with an application package name of a chat application in Huawei AppGallery, that is, App Ids are the same. After the map application is run in the foreground, the user equipment successfully matches an App Id (that is, a spoofed Id that is the same as that of the chat application) of the map application with the OS App Id in the URSP, and then routes, according to indication of the URSP, data of the map application to a slice that is supposed to correspond to the chat application for transmission. A slice corresponding to a chat application is a high-priority slice, and a slice that is supposed to correspond to a map application is a low-priority slice, or a transmission manner that is supposed to correspond to a map application is non-3GPP transmission, that is, transmission is not performed by using a slice. In this case, because the map application uses a spoofed App Id, the map application occupies the high-priority slice for transmission. This brings a waste of operator resources.

An embodiment of this application provides an application data transmission method. An App Store Id and an App Id in a URSP are used, so that when user equipment verifies an application, the user equipment combines the App Store Id and the App Id, to resolve a problem that the App Id is spoofed.

The technical solutions in the foregoing method embodiments are described below in detail by using several specific embodiments. It should be noted that an example in which the user equipment is UE is used for description in the following embodiments.

### Scenario 1

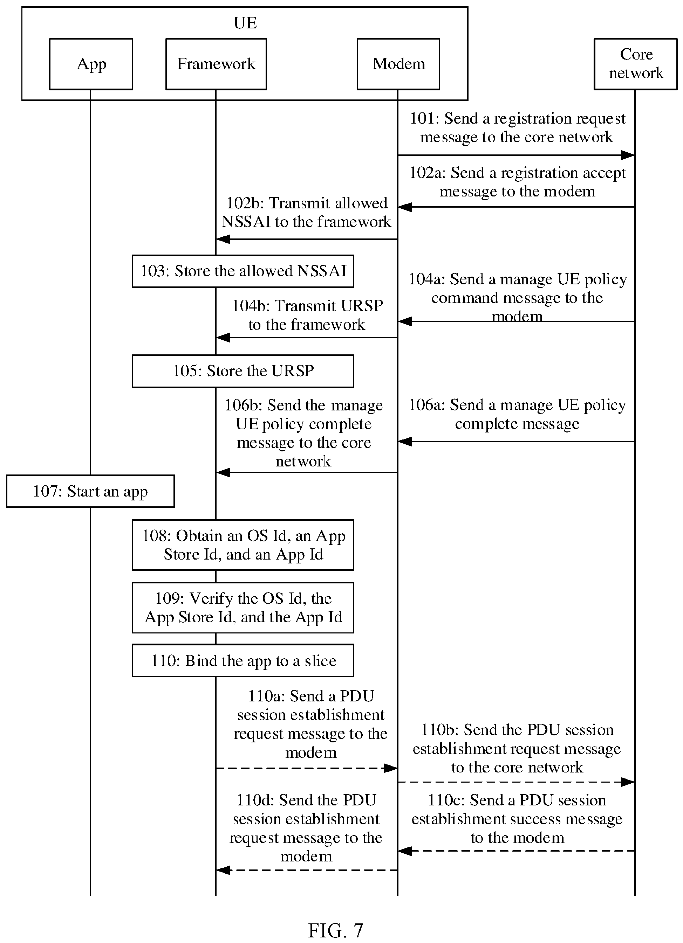

With reference to FIG. 3, FIG. 7 is a schematic flowchart of an application data transmission method according to an embodiment of this application. In FIG. 7:

Step 101: A modem sends a registration request message to a core network.

Specifically, the UE initiates a registration procedure when the UE is powered on, disables an airplane mode, is disconnected from a network, or the like. For example, after a mobile phone (that is, the UE) is powered on, the mobile phone initiates the registration procedure. Alternatively, after the user refreshes the mobile phone, the mobile phone also initiates the registration procedure. The registration procedure may be understood as that the mobile phone registers with a network. For specific details, refer to a UE registration procedure in an existing standard. Details are not described in this application.

For example, refer to FIG. 7. The modem of the UE sends the registration request (Registration request) message to the core network, to request to initiate the registration procedure. For example, the message may carry information such as a registration type and a security parameter. For details, refer to a registration procedure in an existing standard. Details are not described in this application.

Step 102a: The core network sends a registration accept (Registration accept) message to the modem.

Specifically, after allowing the UE to register with the network, the core network sends the registration accept message to the UE. The message carries one or more parameters used to indicate the user equipment to access the core network. For example, in this embodiment, the registration accept message carries allowed network slice selection assistance information (Allowed NSSAI), to indicate one or more slices that are allowed to be accessed by the user equipment.

Step 102b: The modem transmits the allowed NSSAI to a framework.

For example, the modem in the UE may be configured to: receive and parse a message from the core network, and forward, to the framework, information carried in the message. It should be noted that the modem is merely used as an example for description in this specification. Actually, a component, a chip, or a software program that is in the UE and that is configured to receive, parse, and forward information from the core network is not limited to the modem.

Step 103: The framework stores the allowed NSSAI.

For example, the framework stores the allowed NSSAI in a storage unit, for example, a memory of the UE, for use in subsequent PDU session establishment.

Step 104a: The core network sends a manage UE policy command message (manage UE policy command message) to the modem.

Specifically, the core network sends the manage UE policy command message to the UE. The message includes but is not limited to the URSP.

For example, in this embodiment, descriptions of the traffic descriptor field in the URSP are as follows:

| Traffic descriptor component type identifier | |
|---|---|
| Bits (bits) | |
| 87654321 | |
| 0 0 0 0 0 0 0 1 | Match-all type |
| 0 0 0 0 1 0 0 0 | OS Id + App Store Id + OS App Id type |
| 0 0 0 1 0 0 0 0 | IPv4 remote address type |
| 0 0 1 0 0 0 0 1 | IPv6 remote address/prefix length type |
| 0 0 1 1 0 0 0 0 | Protocol identifier/next header type |
| 0 1 0 1 0 0 0 0 | Single remote port type |
| 0 1 0 1 0 0 0 1 | Remote port range type |
| 0 1 1 0 0 0 0 0 | Security parameter index type |
| 0 1 1 1 0 0 0 0 | Type of service/traffic class type |
| 1 0 0 0 0 0 0 0 | Flow label type |
| 1 0 0 0 0 0 0 1 | Destination MAC address type |
| 1 0 0 0 0 0 1 1 | 802.1Q C-TAG VID type |
| 1 0 0 0 0 1 0 0 | 802.1Q S-TAG VID type |
| 1 0 0 0 0 1 0 1 | 802.1Q C-TAG PCP/DEI type |
| 1 0 0 0 0 1 1 0 | 802.1Q S-TAG PCP/DEI type |
| 1 0 0 0 0 1 1 1 | Ethertype type |
| 1 0 0 0 1 0 0 0 | DNN type |
| 1 0 0 1 0 0 0 0 | Connection capabilities type |

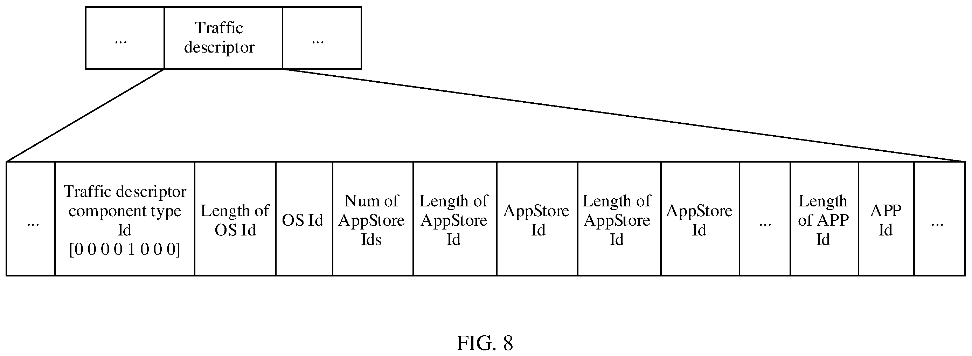

For example, FIG. 8 is a schematic diagram of an example of a format of the URSP. Refer to FIG. 8. The URSP includes but is not limited to the traffic descriptor field, and other fields are not shown in FIG. 8.

For example, the traffic descriptor field includes one or more traffic descriptor component type identifier fields, and each traffic descriptor component type identifier field may include any enumerated value listed above. For example, the traffic descriptor component type identifier field includes an enumerated value [0 0 0 0 0 0 0 1], to indicate that information carried in a subsequent bitstream (until next traffic descriptor component type identifier field) is the match-all type.

It should be noted that only the OS Id + App Store Id+OS App Id type is used as an example in FIG. 8. Actually, the traffic descriptor field may further include a bitstream corresponding to another type. Details are not described in this application.

Refer to FIG. 8. The traffic descriptor component type identifier field includes [0 0 0 0 1 0 0 0], and is used to indicate that information carried in a subsequent bitstream (until next traffic descriptor component type identifier field) is the OS Id + App Store Id+OS App Id type, that is, includes an OS Id, an App Store Id, and an App Id. For example, a format corresponding to the OS Id + App Store Id+OS App Id type is shown in FIG. 8, and includes: a length of OS Id (Length of OS Id) field, an OS Id field, a number of application store identifiers (Num of App Store Ids) field, one or more length of App Store Id fields, one or more App Store Id fields, a length of App Id field, and an App Id field.

The following describes the fields in detail:

The length of OS Id field is used to indicate a length of the OS Id field, or may be understood as indicating a length of the OS Id. It should be noted that a length of the field or the information in this application is a length of an occupied time domain resource, for example, three sign bits or three bits. For example, a length of the length of OS Id field is 1 byte.

The OS Id field is used to indicate identification information of an operating system, that is, carry the OS Id.

The Num of App Store Ids field is used to indicate a number of reliable application markets or application stores. For example, a length of the field is 1 byte.

The length of App Store Id field is used to indicate a length of the App Store Id field. For example, a length of the field is 1 byte.

The App Store Id field is used to indicate an App Store Id of an application store, or referred to as an application platform, an application market, or the like.

An Android operating system is used as an example. A reliable App Store in the Android operating system may include but is not limited to: Google Play, Huawei AppGallery, and the like. It should be noted that the App Store Id is a result obtained after the core network negotiates with each application market, and the core network stores App Store Ids of one or more App Stores corresponding to different operating systems. It should be further noted that the core network performs validity verification on each application market, that is, only an App Store Id corresponding to an application market in which the validity verification succeeds is carried in the URSP.

Optionally, in the registration procedure of the UE in the step 101, the core network may obtain operating system information of the UE. In other words, information (or parameters) such as the OS Id, the App Store Id, and the APP Id in the URSP is information corresponding to the operating system of the UE, for example, an OS Id corresponding to the operating system of the UE, an App Store Id of an application market corresponding to the operating system of the UE, and an ID corresponding to an application in the operating system of the UE.

For example, the Num of App Store Ids field may be used to indicate that the operating system corresponding to the OS Id includes two application stores. In other words, a subsequent bitstream includes two length of App Store Id fields and two App Store Id fields. For example, one App Store Id field carries an App Store Id of Huawei AppGallery, and the other App Store Id field carries an App Store Id of Google Play. It should be noted that "subsequent" of the fields in this application refers to a sequential relationship in time domain. Details are not described below again.

The length of App Id field is used to indicate a length of the App Id field. For example, a length of the length of App Id field is 1 byte.

The App Id field is used to indicate an App Id of an application, that is, carry one or more App Ids. It should be noted that the App Id carried in the App Id field is an App Id verified by each application market. Optionally, a plurality of App Ids included in the App Id field may be separated by using separators, to distinguish between different App Ids. A separation manner is merely an example, and is not limited in this application. Optionally, the App Id field may also include a plurality of App Id subfields, and each App Id subfield carries one App Id.

For example, the core network stores an App Id of each application corresponding to the application market of the operating system, and one or more App Ids carried in the App Id field of the URSP correspond to applications in each application market in the operating system of the UE. The Android operating system is used as an example. The one or more App Ids carried in the App Id field of the URSP sent by the core network to the UE are App Ids of applications in Huawei AppGallery and Google Play in the Android operating system.

It should be noted that the App Id in the App Id field indicates an application whose data needs to be routed to the sliced network. In other words, only an App Id of the application that is in the application market and whose data needs to be routed to the sliced network is carried in the App Id field, and data that is of the application and that is not in the App Id field is transmitted through the non-sliced network.

Step 104b: The modem transmits the URSP to the framework.

Specifically, the modem receives and parses the manage UE policy command message to obtain the URSP, and transmits the URSP to the URSP.

Step 105: The framework stores the URSP.

Specifically, after obtaining the URSP transmitted by the modem, the framework decodes the URSP and performs validity verification on the URSP, to obtain parameters and information carried in the fields in the URSP. For example, the information stored in the framework includes but is not limited to an OS Id, an App Store Id, and an App Id.

For example, the foregoing information may be stored in a memory. This is not limited in this application.

It should be noted that storing the URSP in this application means storing the parameters and information carried in the URSP. Details are not described below again.

Step 106a: The framework sends a manage UE policy complete message.

Specifically, after successfully storing the parameters included in the URSP, the framework sends the manage UE policy complete message to the modem, to indicate that the framework successfully processes the URSP.

For example, if the framework fails to parse the URSP or the framework fails to store the URSP due to another reason, the framework sends a manage UE policy command reject message to the modem, and the modem forwards the message to the core network.

Step 106b: The modem sends the manage UE policy complete message to the core network.

Step 107: Start an app.

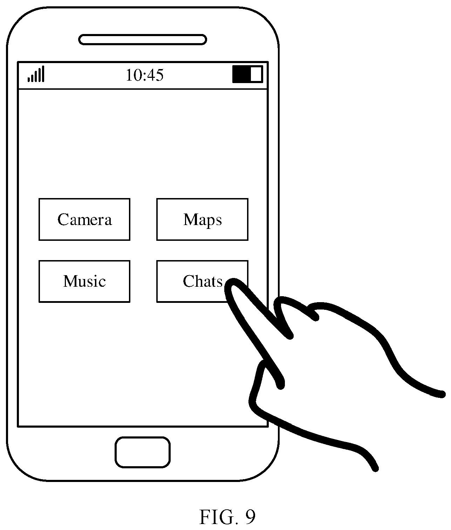

For example, the UE is a mobile phone having the Android operating system, and the user may download and install a chat application in Huawei AppGallery. After the application is installed, the user may tap on a screen to start the chat application, as shown in FIG. 9.

Step 108: The framework obtains the OS Id, the App Store Id, and the App Id.

For example, the chat application is started, the framework may detect that the application is run in the foreground, and the framework may obtain the OS Id of the operating system of the UE, the App Id of the chat application, and an installation source (that is, a download source) of the chat application, that is, the App Store Id of Huawei AppGallery.

For example, the OS Id of the operating system may be stored in a memory, and the framework may invoke the OS Id through an interface or program instructions. For example, the App Id may be an application package name of the chat application, and the framework may invoke the application package name from a related file (for example, an application description file) of the application. For example, the installation source of the chat application may also be included in a related file of the application. The framework may invoke information about the installation source through an interface, program instructions, or a tool. For example, the installation source of the chat application, that is, the App Store Id of Huawei AppGallery, is obtained through getInstallerPackageName in FrameworkPackageManager.java.

Step 109: The framework verifies the OS Id, the App Store Id, and the App Id.

Specifically, the framework matches the OS Id, the App Store Id, and the App Id with the OS Id, the one or more App Store Ids, and the one or more App Ids in the URSP stored in the step 105. If the OS Id, the App Store Id, and the App Id are successfully matched, that is, exist in the URSP delivered by the core network, the framework determines that verification of the OS Id, the App Store Id, and the App Id succeeds, and the data of the application (for example, the chat application) may be routed to the sliced network.

For example, if any one of the OS Id, the App Store Id, and the App Id fails to be matched, that is, does not exist in the URSP, the framework determines that verification fails, and the data of the application cannot be routed to the sliced network, that is, transmitted through the non-sliced network.

For example, the foregoing map application with a spoofed App Id is still used as an example. The user equipment downloads, according to a user instruction, the map application from a web page provided by a third-party server. After detecting that the map application is run in the foreground, the framework obtains an OS Id, an installation source of the map application, and an App Id (the same as that of the chat application). The installation source may be a website address of a web page. The framework verifies the OS Id. If the OS Id exists in the URSP, the framework determines that verification of the OS Id succeeds. Then, the framework verifies the installation source of the map application, that is, the website address of the web page. If the website address of the web page does not exist in the App Store Id indicated by the URSP, the framework determines that verification of the installation source fails. In other words, even if the App Id of the map application is the same as the App Id of the chat application whose data needs to be routed to the sliced network, because the verification of the installation source of the map application fails, in a subsequent procedure, the framework does not allow the data of the map application to be transmitted through the sliced network, so that overheads of an operator network are reduced.

Step 110: The framework binds the app to a slice.

For example, the chat application is still used as an example. After successfully verifying the OS Id, the App Store Id, and the App Id, the framework may further obtain, based on other information, for example, the sliced network activation parameter described above, in the URSP, a slice corresponding to the chat application and other related information about the slice, for example, NSSAI of the slice.

For example, the framework may match the NSSAI of the slice with the allowed NSSAI stored in step 103, to determine whether the core network allows data of the UE to be routed to the slice.

In an example, if the framework detects that a PDU session corresponding to the slice is not established, a PDU session establishment procedure needs to be triggered. Refer to FIG. 7. The method further includes the following steps.

Step 110a: The framework sends a PDU session establishment request message to the modem.

Step 110b: The modem sends the PDU session establishment request message to the core network.

For example, the framework initiates the PDU session establishment procedure to the core network, to establish the PDU session corresponding to the slice of the chat application. For example, the PDU session establishment request message carries the NSSAI of the slice corresponding to the chat application.

Step 110c: The core network sends a PDU session establishment success message to the modem.

Step 110d: The modem sends the PDU session establishment success message to the framework.

For example, the core network establishes, based on the received PDU session establishment request message, the PDU session of the slice corresponding to the NSSAI, and returns the PDU session establishment success message to the modem after the PDU session is successfully established.

It should be noted that, for specific details of the PDU session establishment procedure, refer to a PDU session establishment procedure specified in an existing standard. Details are not described in this application.

Specifically, after receiving the PDU session establishment success message, the framework determines that the PDU session is successfully established, and binds the chat application to the PDU session. For example, binding may mean that the framework correspondingly records the App Id of the chat application and related information (for example, a traffic interface or a routing entry) of the PDU session in a memory, so that after detecting data corresponding to the App Id, the framework determines the PDU session bound to the App Id, and routes the data of the chat application to the slice corresponding to the PDU session.

In another example, if the framework detects that the PDU session of the slice corresponding to the chat application is established, the framework directly binds the chat to the PDU session, and does not need to perform the PDU session establishment procedure.

It should be noted that, for another application in the UE, after the application is started for the first time, the step 107 to the step 110 may be repeatedly performed. For example, for an application that has completed PDU session binding, data transmission may be directly performed, that is, data of the application is routed to a corresponding slice.

In a possible implementation, descriptions of the traffic descriptor field may be as follows:

| Traffic descriptor component type identifier | |
|---|---|
| Bits | |
| 87654321 | |
| 0 0 0 0 0 0 0 1 | Match-all type |
| 0 0 0 0 1 0 0 0 | AppStore Id + OS App Id type |
| 0 0 0 1 0 0 0 0 | IPv4 remote address type |
| 0 0 1 0 0 0 0 1 | IPv6 remote address/prefix length type |
| 0 0 1 1 0 0 0 0 | Protocol identifier/next header type |
| 0 1 0 1 0 0 0 0 | Single remote port type |
| 0 1 0 1 0 0 0 1 | Remote port range type |
| 01 1 0 0 0 0 0 | Security parameter index type |
| 0 1 1 1 0 0 0 0 | Type of service/traffic class type |
| 1 0 0 0 0 0 0 0 | Flow label type |
| 1 0 0 0 0 0 0 1 | Destination MAC address type |
| 1 0 0 0 0 0 1 1 | 802.1Q C-TAG VID type |
| 1 0 0 0 0 1 0 0 | 802.1Q S-TAG VID type |
| 1 0 0 0 0 1 0 1 | 802.1Q C-TAG PCP/DEI type |
| 1 0 0 0 0 1 1 0 | 802.1Q S-TAG PCP/DEI type |
| 1 0 0 0 0 1 1 1 | Ethertype type |
| 1 0 0 0 1 0 0 0 | DNN type |
| 1 0 0 1 0 0 0 0 | Connection capabilities type |

Specifically, the traffic descriptor component type identifier field has a value of [00001000], and is used to indicate the App Store Id + OS App Id type, that is, a subsequent bitstream includes the App Store Id and the App Id, but does not include the OS Id.

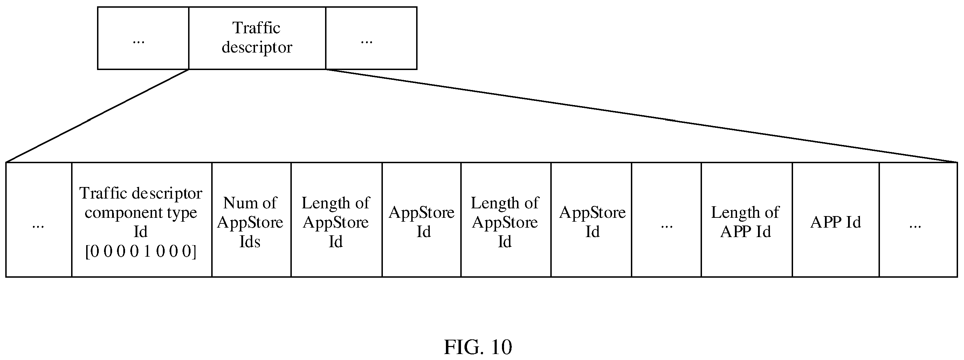

Correspondingly, FIG. 10 is a schematic diagram of a format of a traffic descriptor field corresponding to the descriptions of the foregoing traffic descriptor field. For descriptions of the fields, refer to the foregoing descriptions. Details are not described herein again.

In other words, in this embodiment, the URSP may not include the OS Id. Correspondingly, in the embodiment shown in FIG. 7, in the step 108, the framework obtains only the App Store Id and the App Id that correspond to the started application. In the step 109, the framework verifies the App Store Id and the App Id. Other details are still consistent with those described in FIG. 7, and are not described in this embodiment.

In a possible implementation, descriptions of the traffic descriptor field may be as follows:

| Traffic descriptor component type identifier | |
|---|---|
| Bits | |
| 87654321 | |
| 0 0 0 0 0 0 0 1 | Match-all type |
| 0 0 0 0 1 0 0 0 | OS Id + OS App Id type |
| 0 0 0 1 0 0 0 0 | IPv4 remote address type |
| 0 0 1 0 0 0 0 1 | IPv6 remote address/prefix length type |
| 0 0 1 1 0 0 0 0 | Protocol identifier/next header type |
| 0 1 0 1 0 0 0 0 | Single remote port type |
| 0 1 0 1 0 0 0 1 | Remote port range type |
| 0 1 1 0 0 0 0 0 | Security parameter index type |
| 0 1 1 1 0 0 0 0 | Type of service/traffic class type |
| 1 0 0 0 0 0 0 0 | Flow label type |
| 1 0 0 0 0 0 0 1 | Destination MAC address type |
| 1 0 0 0 0 0 1 1 | 802.1Q C-TAG VID type |
| 1 0 0 0 0 1 0 0 | 802.1Q S-TAG VID type |
| 1 0 0 0 0 1 0 1 | 802.1Q C-TAG PCP/DEI type |
| 1 0 0 0 0 1 1 0 | 802.1Q S-TAG PCP/DEI type |
| 1 0 0 0 0 1 1 1 | Ethertype type |
| 1 0 0 0 1 0 0 0 | DNN type |
| 1 0 0 1 0 0 0 0 | Connection capabilities type |
| 1 0 1 0 0 0 0 0 | AppStore Id + App Id type |

Specifically, when the Traffic descriptor component type identifier field has a value of [00001000], the Traffic descriptor component type identifier field still uses a rule in the 3GPP standard, to indicate the OS Id + OS App Id type, that is, a subsequent bitstream includes the OS Id and the OS App Id.

For example, when the traffic descriptor component type identifier field has a value of [1 0 1 0 0 0 0 0], the traffic descriptor component type identifier field is used to indicate the App Store Id + App Id type, that is, a subsequent bitstream includes the App Store Id and the App Id.

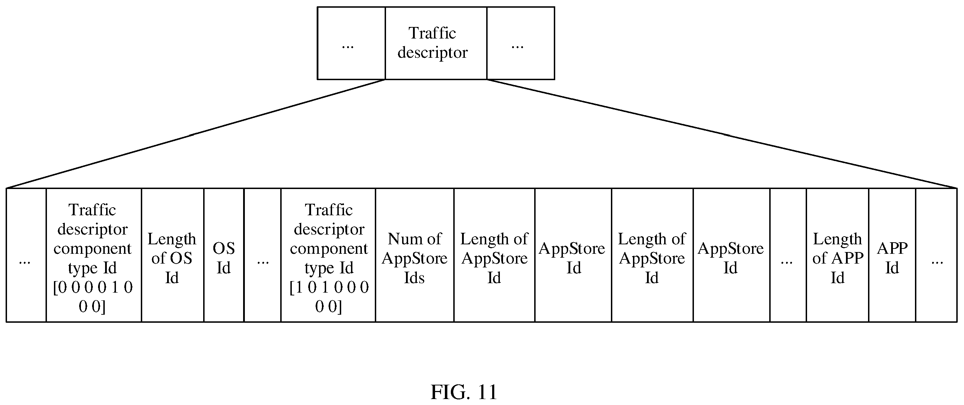

Correspondingly, FIG. 11 is a schematic diagram of a format of a traffic descriptor field corresponding to the descriptions of the foregoing traffic descriptor field. For descriptions of the fields, refer to the foregoing descriptions. Details are not described herein again.

In another possible implementation, after a service corresponding to the UE is updated, the registration procedure is also initiated. For example, the user changes an operator package of the mobile phone. In an example, the user may change the operator package by using an operator app of the mobile phone, and the mobile phone notifies the core network that the operator package has been changed. In another example, the user may also call the operator to change the operator package. The operator may directly change the operator package of the user in the core network. Specifically, after the operator package is changed, the core network resends the URSP to the UE, that is, repeats the step 104a to the step 110. For example, in the steps shown in FIG. 7, the chat application is bound to a PDU session 1, and the data of the chat application is routed to a slice 1. After the operator package of the UE is updated, the UE may be triggered to re-establish a PDU session 2 corresponding to the chat application to the core network, and the data of the chat application is routed to a slice 2. For example, a priority of the slice 2 may be lower than that of the slice 1. The foregoing example is merely an example, and is not limited in this application.

It may be understood that to implement the foregoing functions, the user equipment includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the user equipment may be divided into function modules based on the foregoing method examples, for example, each function module may be obtained through division based on each corresponding function, or two or more functions may be integrated into one processing module. The integrated module may be implemented in a form of hardware. It should be noted that, in embodiments, module division is an example, is merely logical function division, and may be other division during actual implementation.

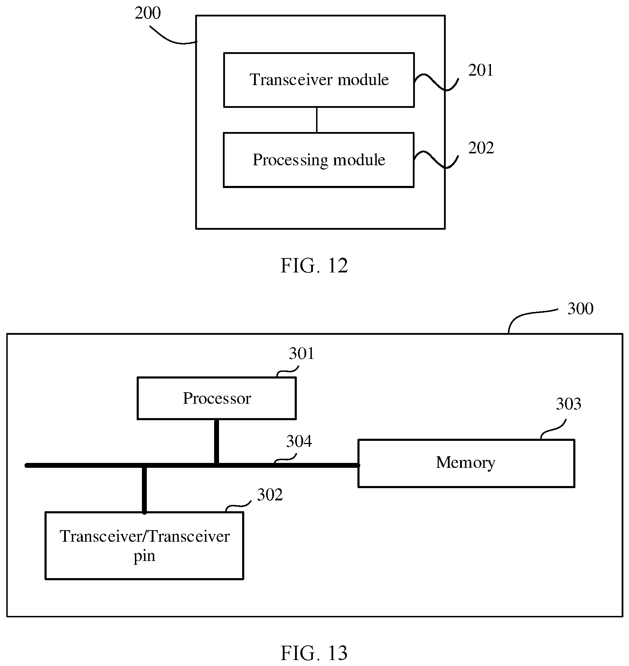

When each functional module is obtained through division based on each corresponding function, FIG. 12 is a schematic diagram of a structure of user equipment 200. The user equipment 200 includes a transceiver module 201 and a processing module 202. The transceiver module 201 is configured to receive a first message from a network device. The first message includes UE route selection policy URSP information. The URSP information includes an application store identifier App Store Id, an application identifier App Id, and slice parameter information. The App Store Id is used to identify an application store, the App Id is used to identify an application, and the slice parameter information is used to indicate a sliced network. The processing module 202 is configured to run a first application. The transceiver module 201 is further configured to transmit data of the first application through the sliced network indicated by the slice parameter information. The first application is from the application store indicated by the App Store Id in the USRP information, and an App Id of the first application is the same as the App Id in the URSP information.

In a possible implementation, the processing module 202 is further configured to run a second application. The transceiver module 201 is further configured to transmit data of the second application through a non-sliced network. The second application is not downloaded from the application store indicated by the App Store Id in the USRP information, and an App Id of the second application is the same as or different from the App Id in the URSP information.

In a possible implementation, the transceiver module 201 is further configured to: if a protocol data unit PDU session corresponding to the sliced network indicated by the slice parameter information is established between the user equipment and the network device, transmit, based on the PDU session, the data of the first application over the sliced network indicated by the slice parameter information.

In a possible implementation, the transceiver module 201 is further configured to: if a protocol data unit PDU session corresponding to the sliced network indicated by the slice parameter information is not established between the user equipment and the network device, establish, by the user equipment, the PDU session with the network device based on the slice parameter information; and transmit, based on the PDU session, the data of the first application over the sliced network indicated by the slice parameter information.

In a possible implementation, the URSP information further includes an operating system identifier OS Id used to identify an operating system. An OS Id of an operating system of the user equipment is the same as the OS Id in the URSP information.

In a possible implementation, the URSP information further includes indication information used to indicate that the URSP information includes the App Store Id and the App Id.

In a possible implementation, the transceiver module 201 is further configured to receive a second message from the network device. The second message includes allowed network slice selection assistance information Allowed NSSAI, used to indicate that user equipment is allowed to transmit a data sliced network set. The sliced network indicated by the slice parameter information is included in the sliced network set.

In a possible implementation, the transceiver module 201 is further configured to: send, to the network device, a registration message used to register with and access the network device; or send, to the network device, a service update message used to indicate that a service in the user equipment is updated.

In a possible implementation, the App Id is an application package name of the application.

In a possible implementation, the application store is an application set including one or more applications.

In another example, FIG. 13 is a schematic block diagram of an apparatus 300 according to an embodiment of this application. The apparatus 300 may include a processor 301 and a transceiver/transceiver pin 302, and optionally, further include a memory 303.

Components of the apparatus 300 are coupled together by using a bus 304. In addition to a data bus, the bus 304 includes a power bus, a control bus, and a status signal bus. However, for clear description, various buses are denoted by the bus system 304 in the figure.

Optionally, the memory 303 may be configured to store instructions in the foregoing method embodiments. The processor 301 may be configured to: execute the instructions in the memory 303, control a receive pin to receive a signal, and control a transmit pin to send a signal.

All related content of the steps in the foregoing method embodiments may be cited in function descriptions of a corresponding function module. Details are not described herein again.

This embodiment further provides a computer storage medium. The computer storage medium stores computer instructions. When the computer instructions are run on user equipment, the user equipment is enabled to perform the foregoing related method steps, to implement the application data transmission method in the foregoing embodiments.

This embodiment further provides a computer program product. When the computer program product runs on a computer, the computer is enabled to perform the related steps, to implement the method in the foregoing embodiments.

This embodiment further provides a system, including user equipment and a network server, which can implement the method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the methods in the foregoing method embodiments.

The user equipment, the computer storage medium, the computer program product, and the chip provided in this embodiment each are configured to perform the corresponding method provided above. Therefore, for beneficial effects that can be achieved by the user equipment device, the computer storage medium, the computer program product, and the chip, refer to the beneficial effects in the corresponding method provided above. Details are not described herein again.

The foregoing descriptions about implementations allow a person skilled in the art to understand that, for the purpose of convenient and brief description, division into the foregoing function modules is taken as an example for illustration. During actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (readonly memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. An application data transmission system, comprising a network device and user equipment (100, 200, 300), wherein
the network device is configured to send a first message to the user equipment (100, 200, 300), wherein the first message comprises UE route selection policy URSP information, the URSP information comprises an application identifier, App Id, and slice parameter information, the App Id is used to identify an application, and the slice parameter information is used to indicate a sliced network; and
the user equipment (100, 200, 300) is configured to: run a first application, and transmit data of the first application through the sliced network indicated by the slice parameter information, wherein an App Id of the first application is the same as the App Id in the URSP information;
wherein if a protocol data unit PDU session corresponding to the sliced network indicated by the slice parameter information is established between the user equipment (100, 200, 300) and the network device, the user equipment (100, 200, 300) is configured to transmit, based on the PDU session, the data of the first application over the sliced network indicated by the slice parameter information, and if a PDU session corresponding to the sliced network indicated by the slice parameter information is not established between the user equipment (100, 200, 300) and the network device, the user equipment (100, 200, 300) is configured to: establish the PDU session with the network device based on the slice parameter information; and transmit, based on the PDU session, the data of the first application over the sliced network indicated by the slice parameter information;
**characterized in that**
the URSP information further comprises an application store identifier, App Store Id, wherein the App Store Id is used to identify an application store; and
the first application is from the application store indicated by the App Store Id in the URSP information,
wherein there are a plurality of types of services in the user equipment (100, 200, 300), PDU sessions of different types of services correspond to different network slices, and different applications in the user equipment (100, 200, 300) correspond to different service types;
wherein provided operators or service providers are different, PDU sessions of a same service type correspond to different network slices.

2. The system according to claim 1, wherein
the user equipment (100, 200, 300) is further configured to: run a second application, and transmit data of the second application through a non-sliced network, wherein the second application is not downloaded from the application store indicated by the App Store Id in the URSP information, and an App Id of the second application is the same as or different from the App Id in the URSP information.

3. The system according to claim 1, wherein the URSP information further comprises an operating system identifier OS Id used to identify an operating system, and an OS Id of an operating system of the user equipment (100, 200, 300) is the same as the OS Id in the URSP information.

4. User equipment(100, 200, 300), comprising:
a processor (110, 202, 301) and a memory, wherein the memory (121, 303) is coupled to the processor (110, 202, 301); and
the memory (121, 303) stores program instructions, and when the program instructions are executed by the processor (110, 202, 301), the user equipment (100, 200, 300) is enabled to perform the following steps:
receiving a first message from a network device, wherein the first message comprises UE route selection policy URSP information, the URSP information comprises an application identifier, App Id, and slice parameter information, the App Id is used to identify an application, and the slice parameter information is used to indicate a sliced network; and
running a first application, and transmitting data of the first application through the sliced network indicated by the slice parameter information, wherein an App Id of the first application is the same as the App Id in the URSP information;
if a protocol data unit PDU session corresponding to the sliced network indicated by the slice parameter information is established between the user equipment (100, 200, 300) and the network device, transmitting, based on the PDU session, the data of the first application over the sliced network indicated by the slice parameter information, and if a PDU session corresponding to the sliced network indicated by the slice parameter information is not established between the user equipment (100, 200, 300) and the network device, establishing the PDU session with the network device based on the slice parameter information; and transmitting, based on the PDU session, the data of the first application over the sliced network indicated by the slice parameter information;
**characterized in that**
the URSP information further comprises an application store identifier, App Store Id, wherein the App Store Id is used to identify an application store; and
the first application is from the application store indicated by the App Store Id in the URSP information,
wherein there are a plurality of types of services in the user equipment (100, 200, 300), PDU sessions of different types of services correspond to different network slices, and different applications in the user equipment (100, 200, 300) correspond to different service types;
wherein provided operators or service providers are different, PDU sessions of a same service type correspond to different network slices.

5. The user equipment (100, 200, 300) according to claim 4, wherein when the program instructions are executed by the processor, the user equipment (100, 200, 300) is enabled to perform the following steps:
running a second application, and transmitting data of the second application through a non-sliced network, wherein the second application is not downloaded from the application store indicated by the App Store Id in the URSP information, and an App Id of the second application is the same as or different from the App Id in the URSP information.

6. The user equipment (100, 200, 300) according to claim 4, wherein the URSP information further comprises an operating system identifier OS Id used to identify an operating system, and an OS Id of an operating system of the user equipment (100, 200, 300) is the same as the OS Id in the URSP information.

7. The user equipment (100, 200, 300) according to claim 4, wherein the URSP information further comprises indication information used to indicate that the URSP information comprises the App Store Id and the App Id.

8. The user equipment (100, 200, 300) according to claim 4, wherein when the program instructions are executed by the processor, the user equipment is enabled to perform the following step:
receiving a second message from the network device, wherein the second message comprises allowed network slice selection assistance information Allowed NSSAI used to indicate that the user equipment (100, 200, 300) is allowed to transmit a sliced network set, and the sliced network indicated by the slice parameter information is comprised in the sliced network set.

9. The user equipment (100, 200, 300) according to claim 4, wherein when the program instructions are executed by the processor (110, 202, 301), the user equipment (100, 200, 300) is enabled to perform the following step:
sending, to the network device, a registration message used to register with and access the network device; or
sending, to the network device, a service update message used to indicate that a service in the user equipment is updated.

10. The user equipment (100, 200, 300) according to claim 4, wherein the App Id is an application package name of the application.

11. The user equipment (100, 200, 300) according to claim 4, wherein the application store is an application set comprising one or more applications.

## Patentansprüche

1. System zur Übertragung von Anwendungsdaten, umfassend eine Netzwerkvorrichtung und eine Benutzereinrichtung (100, 200, 300), wobei
die Netzwerkvorrichtung dafür ausgelegt ist, eine erste Nachricht an die Benutzereinrichtung (100, 200, 300) zu senden, wobei die erste Nachricht UE-Routenauswahlrichtlinien, URSP ("UE Route Selection Policy"), -Informationen umfasst, die URSP-Informationen eine Anwendungskennung, App Id, und "Slice"-Parameterinformationen umfassen, die App Id verwendet wird, um eine Anwendung zu identifizieren, und die "Slice"-Parameterinformationen verwendet werden, um ein "Slice"-Netzwerk anzuzeigen, und
die Benutzereinrichtung (100, 200, 300) dafür ausgelegt ist: eine erste Anwendung auszuführen und Daten der ersten Anwendung über das "Slice"-Netzwerk, das durch die "Slice"-Parameterinformationen angezeigt ist, zu übertragen, wobei eine App Id der ersten Anwendung identisch mit der App Id in den URSP-Informationen ist; wobei, wenn eine Protokolldateneinheit, PDU ("Protocol Data Unit"), -Sitzung, die dem durch die "Slice"-Parameterinformationen angezeigten "Slice"-Netzwerk entspricht, zwischen der Benutzereinrichtung (100, 200, 300) und der Netzwerkvorrichtung aufgebaut wird, die Benutzereinrichtung (100, 200, 300) dafür ausgelegt ist, basierend auf der PDU-Sitzung die Daten der ersten Anwendung über das durch die "Slice"-Parameterinformationen angezeigte "Slice"-Netzwerk zu übertragen, und wenn eine PDU-Sitzung, die dem durch die "Slice"-Parameterinformationen angezeigten "Slice"-Netzwerk entspricht, zwischen der Benutzereinrichtung (100, 200, 300) und der Netzwerkvorrichtung nicht aufgebaut wird, die Benutzereinrichtung (100, 200, 300) dafür ausgelegt ist: die PDU-Sitzung mit der Netzwerkvorrichtung basierend auf den "Slice"-Parameterinformationen aufzubauen; und basierend auf der PDU-Sitzung die Daten der ersten Anwendung über das durch die "Slice"-Parameterinformationen angezeigte "Slice"-Netzwerk zu übertragen;
**dadurch gekennzeichnet, dass**
die URSP-Informationen ferner eine Anwendungsspeicherkennung, App Store Id, umfassen, wobei die App Store Id zur Identifizierung eines Anwendungsspeichers verwendet wird; und
die erste Anwendung aus dem Anwendungsspeicher stammt, der durch die App Store Id in den URSP-Informationen angezeigt ist,
wobei es mehrere Diensttypen in der Benutzereinrichtung (100, 200, 300) gibt, PDU-Sitzungen verschiedener Diensttypen verschiedenen Netzwerk-"Slices" entsprechen und verschiedene Anwendungen in der Benutzereinrichtung (100, 200, 300) verschiedenen Diensttypen entsprechen;
wobei, vorausgesetzt, dass Betreiber oder Dienstanbieter verschieden sind, PDU-Sitzungen desselben Diensttyps verschiedenen Netzwerk-"Slices" entsprechen.

2. System gemäß Anspruch 1, wobei
die Benutzereinrichtung (100, 200, 300) ferner dafür ausgelegt ist: eine zweite Anwendung auszuführen und Daten der zweiten Anwendung über ein Nicht-"Slice"-Netzwerk zu übertragen, wobei die zweite Anwendung nicht aus dem Anwendungsspeicher heruntergeladen wird, der durch die App Store Id in den URSP-Informationen angezeigt ist, und eine App Id der zweiten Anwendung gleich oder verschieden von der App Id in den URSP-Informationen ist.

3. System gemäß Anspruch 1, wobei die URSP-Informationen ferner eine Betriebssystemkennung, OS Id, umfassen, die zur Identifizierung eines Betriebssystems verwendet wird, und eine OS Id eines Betriebssystems der Benutzereinrichtung (100, 200, 300) identisch mit der OS Id in den URSP-Informationen ist.

4. Benutzereinrichtung(100, 200, 300), umfassend:
einen Prozessor (110, 202, 301) und einen Speicher, wobei der Speicher (121, 303) mit dem Prozessor (110, 202, 301) gekoppelt ist; und
der Speicher (121, 303) Programmanweisungen speichert, und wenn die Programmanweisungen durch den Prozessor (110, 202, 301) ausgeführt werden, die Benutzereinrichtung (100, 200, 300) in die Lage versetzt wird, die folgenden Schritte durchzuführen:
Empfangen einer ersten Nachricht von einer Netzwerkvorrichtung, wobei die erste Nachricht UE-Routenauswahlrichtlinien, URSP ("UE Route Selection Policy"), -Informationen umfasst, die URSP-Informationen eine Anwendungskennung, App Id, und "Slice"-Parameterinformationen umfassen, die App Id verwendet wird, um eine Anwendung zu identifizieren und die "Slice"-Parameterinformationen verwendet werden, um ein "Slice"-Netzwerk anzuzeigen; und
Ausführen einer ersten Anwendung und Übertragen von Daten der ersten Anwendung über das "Slice"-Netzwerk, das durch die "Slice"-Parameterinformationen angezeigt ist, wobei eine App Id der ersten Anwendung identisch mit der App Id in den URSP-Informationen ist;
wenn eine Protokolldateneinheit, PDU ("Protocol Data Unit"), -Sitzung, die dem durch die "Slice"-Parameterinformationen angezeigten "Slice"-Netzwerk entspricht, zwischen der Benutzereinrichtung (100, 200, 300) und der Netzwerkvorrichtung aufgebaut wird, Übertragen, basierend auf der PDU-Sitzung, der Daten der ersten Anwendung über das durch die "Slice"-Parameterinformationen angezeigte "Slice"-Netzwerk, und wenn eine PDU-Sitzung, die dem durch die "Slice"-Parameterinformationen angezeigten "Slice"-Netzwerk entspricht, zwischen der Benutzereinrichtung (100, 200, 300) und der Netzwerkvorrichtung nicht aufgebaut wird, Aufbauen der PDU-Sitzung mit der Netzwerkvorrichtung basierend auf den "Slice"-Parameterinformationen; und Übertragen, basierend auf der PDU-Sitzung, der Daten der ersten Anwendung über das durch die "Slice"-Parameterinformationen angezeigte "Slice"-Netzwerk;
**dadurch gekennzeichnet, dass**
die URSP-Informationen ferner eine Anwendungsspeicherkennung, App Store Id, umfassen, wobei die App Store Id zur Identifizierung eines Anwendungsspeichers verwendet wird; und
die erste Anwendung aus dem Anwendungsspeicher stammt, der durch die App Store Id in den URSP-Informationen angezeigt ist,
wobei es mehrere Diensttypen in der Benutzereinrichtung (100, 200, 300) gibt, PDU-Sitzungen verschiedener Diensttypen verschiedenen Netzwerk-"Slices" entsprechen und verschiedene Anwendungen in der Benutzereinrichtung (100, 200, 300) verschiedenen Diensttypen entsprechen;
wobei, vorausgesetzt, dass Betreiber oder Dienstanbieter verschieden sind, PDU-Sitzungen desselben Diensttyps verschiedenen Netzwerk-"Slices" entsprechen.

5. Benutzereinrichtung (100, 200, 300) gemäß Anspruch 4, wobei, wenn die Programmanweisungen durch den Prozessor ausgeführt werden, die Benutzereinrichtung (100, 200, 300) in die Lage versetzt wird, die folgenden Schritte durchzuführen:
Ausführen einer zweiten Anwendung und Übertragen von Daten der zweiten Anwendung über ein Nicht-"Slice"-Netzwerk,
wobei die zweite Anwendung nicht aus dem Anwendungsspeicher heruntergeladen wird, der durch die App Store Id in den URSP-Informationen angezeigt ist, und eine App Id der zweiten Anwendung gleich oder verschieden von der App Id in den URSP-Informationen ist.

6. Benutzereinrichtung (100, 200, 300) gemäß Anspruch 4, wobei die URSP-Informationen ferner eine Betriebssystemkennung, OS Id, umfassen, die zur Identifizierung eines Betriebssystems verwendet wird, und eine OS Id eines Betriebssystems der Benutzereinrichtung (100, 200, 300) identisch mit der OS Id in den URSP-Informationen ist.

7. Benutzereinrichtung (100, 200, 300) gemäß Anspruch 4, wobei die URSP-Informationen ferner Anzeigeinformationen umfassen, die dazu dienen anzuzeigen, dass die URSP-Informationen die App Store Id und die App Id umfassen.

8. Benutzereinrichtung (100, 200, 300) gemäß Anspruch 4, wobei, wenn die Programmanweisungen durch den Prozessor ausgeführt werden, die Benutzereinrichtung in die Lage versetzt wird, den folgenden Schritt durchzuführen: Empfangen einer zweiten Nachricht von der Netzwerkvorrichtung, wobei die zweite Nachricht erlaubte Netzwerk-"Slice"-Auswahlunterstützungsinformationen ("Allowed NSSAI", "Network Slice Selection Assistance Information") umfasst, die verwendet werden, um anzuzeigen, dass es der Benutzereinrichtung (100, 200, 300) erlaubt ist, einen "Slice"-Netzwerksatz zu übertragen, und dass das durch die "Slice"-Parameterinformationen angezeigte "Slice"-Netzwerk in dem "Slice"-Netzwerksatz enthalten ist.

9. Benutzereinrichtung (100, 200, 300) gemäß Anspruch 4, wobei, wenn die Programmanweisungen durch den Prozessor (110, 202, 301) ausgeführt werden, die Benutzereinrichtung (100, 200, 300) in die Lage versetzt wird, den folgenden Schritt durchzuführen:
Senden, an die Netzwerkvorrichtung, einer Registrierungsnachricht, die verwendet wird, um sich bei der Netzwerkvorrichtung zu registrieren und Zugriff darauf zu erhalten; oder
Senden, an die Netzwerkvorrichtung, einer Dienstaktualisierungsnachricht, die verwendet wird, um anzuzeigen, dass ein Dienst in der Benutzereinrichtung aktualisiert wurde.

10. Benutzereinrichtung (100, 200, 300) gemäß Anspruch 4, wobei die App Id ein Anwendungspaketname der Anwendung ist.

11. Benutzereinrichtung (100, 200, 300) gemäß Anspruch 4, wobei der Anwendungsspeicher ein Anwendungssatz mit einer oder mehreren Anwendungen ist.

## Revendications

1. Système de transmission de données d'application, comprenant un dispositif de réseau et un équipement utilisateur (100, 200, 300), dans lequel le dispositif de réseau est configuré pour envoyer un premier message à l'équipement utilisateur (100, 200, 300), dans lequel le premier message comprend des informations de politique de sélection de route d'UE, URSP, les informations URSP comprennent un identifiant d'application, App Id, et des informations de paramètres de tranche, l'App Id est utilisé pour identifier une application, et les informations de paramètres de tranche sont utilisées pour indiquer un réseau en tranches ; et l'équipement utilisateur (100, 200, 300) est configuré pour : exécuter une première application et transmettre des données de la première application à travers le réseau en tranches indiqué par les informations de paramètres de tranche, dans lequel un App Id de la première application est le même que l'App Id dans les informations URSP ;
dans lequel si une session d'unité de données de protocole, PDU, correspondant au réseau en tranches indiqué par les informations de paramètres de tranche est établie entre l'équipement utilisateur (100, 200, 300) et le dispositif de réseau, l'équipement utilisateur (100, 200, 300) est configuré pour transmettre, sur la base de la session PDU, les données de la première application sur le réseau en tranches indiqué par les informations de paramètres de tranche, et si une session PDU correspondant au réseau en tranches indiqué par les informations de paramètres de tranche n'est pas établie entre l'équipement utilisateur (100, 200, 300) et le dispositif de réseau, l'équipement utilisateur (100, 200, 300) est configuré pour : établir la session PDU avec le dispositif de réseau sur la base des informations de paramètres de tranche ; et transmettre, sur la base de la session PDU, les données de la première application sur le réseau en tranches indiqué par les informations de paramètres de tranche ; **caractérisé en ce que**
les informations URSP comprennent en outre un identifiant de stockage d'application, App Store Id, dans lequel l'App Store Id est utilisé pour identifier un stockage d'application ; et
la première application vient du stockage d'application indiqué par l'App Store Id dans les informations URSP,
dans lequel il existe une pluralité de types de services dans l'équipement utilisateur (100, 200, 300), des sessions PDU de différents types de services correspondent à différentes tranches de réseau, et différentes applications dans l'équipement utilisateur (100, 200, 300) correspondent à différents types de services ;
dans lequel des opérateurs fournis ou des fournisseurs de services sont différents, des sessions PDU d'un même type de service correspondent à différentes tranches de réseau.

2. Système selon la revendication 1, dans lequel
l'équipement utilisateur (100, 200, 300) est configuré en outre pour : exécuter une seconde application, et transmettre des données de la seconde application à travers un réseau non tranché, dans lequel la seconde application n'est pas téléchargée à partir du stockage d'application indiqué par l'App Store Id dans les informations URSP, et un App Id de la seconde application est le même que l'App Id, ou est différent de celui-ci, dans les informations URSP.

3. Système selon la revendication 1, dans lequel les informations URSP comprennent en outre un identifiant de système d'exploitation, OS Id, utilisé pour identifier un système d'exploitation, et un OS Id d'un système d'exploitation de l'équipement utilisateur (100, 200, 300) est le même que l'OS Id dans les informations URSP.

4. Équipement utilisateur (100, 200, 300), comprenant :
un processeur (110, 202, 301) et une mémoire, dans lequel la mémoire (121, 303) est couplée au processeur (110, 202, 301) ; et
la mémoire (121, 303) stocke des instructions de programme, et lorsque les instructions de programme sont exécutées par le processeur (110, 202, 301), l'équipement utilisateur (100, 200, 300) est autorisé à exécuter les étapes suivantes : la réception d'un premier message à partir d'un dispositif de réseau, dans lequel le premier message comprend des informations de politique de sélection de route d'UE, URSP, les informations URSP comprennent un identifiant d'application, App Id, et des informations de paramètres de tranche, l'App Id est utilisé pour identifier une application, et les informations de paramètres de tranche sont utilisées pour indiquer un réseau en tranches ; et
l'exécution d'une première application et la transmission des données de la première application à travers le réseau en tranches indiqué par les informations de paramètres de tranche, dans lequel un App Id de la première application est le même que l'App Id dans les informations URSP ;
si une session d'unité de données de protocole, PDU, correspondant au réseau en tranches indiqué par les informations de paramètres de tranche est établie entre l'équipement utilisateur (100, 200, 300) et le dispositif de réseau, la transmission, sur la base de la session PDU, des données de la première application sur le réseau en tranches indiqué par les informations de paramètres de tranche, et si une session PDU correspondant au réseau en tranches indiqué par les informations de paramètres de tranche n'est pas établie entre l'équipement utilisateur (100, 200, 300) et le dispositif de réseau, l'établissement de la session PDU avec le dispositif de réseau sur la base des informations de paramètres de tranche ; et la transmission, sur la base de la session PDU, des données de la première application sur le réseau en tranches indiqué par les informations de paramètres de tranche ;
**caractérisé en ce que**
les informations URSP comprennent en outre un identifiant de stockage d'application, App Store Id, dans lequel l'App Store Id est utilisé pour identifier un stockage d'application ; et
la première application vient du stockage d'application indiqué par l'App Store Id dans les informations URSP,
dans lequel il existe une pluralité de types de services dans l'équipement utilisateur (100, 200, 300), des sessions PDU de différents types de services correspondent à différentes tranches de réseau, et différentes applications dans l'équipement utilisateur (100, 200, 300) correspondent à différents types de services ;
dans lequel des opérateurs fournis ou des fournisseurs de services sont différents, des sessions PDU d'un même type de service correspondent à différentes tranches de réseau.

5. Équipement utilisateur (100, 200, 300) selon la revendication 4, dans lequel lorsque les instructions de programme sont exécutées par le processeur, l'équipement utilisateur (100, 200, 300) est autorisé à exécuter les étapes suivantes :
l'exécution d'une seconde application et la transmission des données de la seconde application à travers un réseau non tranché, dans lequel la seconde application n'est pas téléchargée à partir du stockage d'application indiqué par l'App Store Id dans les informations URSP, et un App Id de la seconde application est le même que l'App Id, ou est différent de celui-ci, dans les informations URSP.

6. Équipement utilisateur (100, 200, 300) selon la revendication 4, dans lequel les informations URSP comprennent en outre un identifiant de système d'exploitation, OS Id, utilisé pour identifier un système d'exploitation, et un OS Id d'un système d'exploitation de l'équipement utilisateur (100, 200, 300) est le même que l'OS Id dans les informations URSP.

7. Équipement utilisateur (100, 200, 300) selon la revendication 4, dans lequel les informations URSP comprennent en outre des informations d'indication utilisées pour indiquer que les informations URSP comprennent l'App Store Id et l'App Id.

8. Équipement utilisateur (100, 200, 300) selon la revendication 4, dans lequel lorsque les instructions de programme sont exécutées par le processeur, l'équipement utilisateur est autorisé à exécuter l'étape suivante :
la réception d'un second message à partir du dispositif de réseau, dans lequel le second message comprend des informations d'assistance de sélection de tranche de réseau autorisées, Allowed NSSAI, utilisées pour indiquer que l'équipement utilisateur (100, 200, 300) est autorisé à transmettre un ensemble de réseaux en tranches, et le réseau en tranches indiqué par les informations de paramètres de tranche est compris dans l'ensemble de réseaux en tranches.

9. Équipement utilisateur (100, 200, 300) selon la revendication 4, dans lequel lorsque les instructions de programme sont exécutées par le processeur (110, 202, 301), l'équipement utilisateur (100, 200, 300) est autorisé à exécuter l'étape suivante :
l'envoi, au dispositif de réseau, d'un message d'enregistrement utilisé pour s'enregistrer auprès du dispositif de réseau et y accéder ; ou
l'envoi, au dispositif de réseau, d'un message de mise à jour de services utilisé pour indiquer qu'un service dans l'équipement utilisateur est mis à jour.

10. Équipement utilisateur (100, 200, 300) selon la revendication 4, dans lequel l'App Id est un nom de paquets d'applications de l'application.

11. Équipement utilisateur (100, 200, 300) selon la revendication 4, dans lequel le stockage d'application est un ensemble d'applications comprenant une ou des applications.
